# EUROPÄISCHE PATENTANMELDUNG

(11) **EP 4 089 489 A1**
(43) Veröffentlichungstag der Anmeldung: **16.11.2022**
(21) Anmeldenummer: 21173650.9
(22) Anmeldetag: 12.05.2021
(51) Int. Cl.: G05B 19/042, G05B 23/02

(54) **LEITSYSTEM FÜR EINE TECHNISCHE ANLAGE**

(71) Anmelder: Siemens Aktiengesellschaft, 80333 München (DE)
(72) Erfinder: Lutz, Benjamin, 76327 Pfinztal (DE)

(57) **Zusammenfassung**

Vorgeschlagen wird ein Leitsystem (13) für eine technische Anlage, welches wenigstens einen Operator Station Server (14) und einen Operator Station Client (15) aufweist,
welcher Operator Station Server (14) einen Visualisierungsdienst (20) zur Ausgabe von Bildinformationen an den Operator Station Client (15) aufweist,
wobei der Operator Station Server (14) dazu ausgebildet ist, zu einer Laufzeit der technischen Anlage zu wenigstens einem technischen Objekt der technischen Anlage eine visuelle Repräsentationsinformation (2, 3, 6, 7) zu erzeugen,
und wobei der Visualisierungsdienst (20) dazu ausgebildet ist, die visuelle Repräsentationsinformation (2, 3, 6, 7) an den Operator Station Client (15) zu übertragen,
und wobei der Operator Station Client (15) dazu ausgebildet ist, die visuelle Repräsentationsinformation (2, 3, 6, 7) einem Operator der technischen Anlage visuell darzubieten. Das Leitsystem (13) ist dadurch gekennzeichnet, dass der Operator Station Client (15) dazu ausgebildet ist, von dem Operator einen Überwachungstrigger (9, 10, 11, 12) bezüglich der visuellen Repräsentationsinformation (2, 3, 6, 7) zu empfangen und an den Operator Station Server (14) weiterzuleiten, wobei der Operator Station Server (14) dazu ausgebildet ist, in Reaktion auf den empfangenen Überwachungstrigger eine Überwachung der visuellen Repräsentationsinformation (2, 3, 6, 7) dahingehend einzurichten, dass der Operator Station Server (14) in Reaktion auf eine Änderung der visuellen Repräsentationsinformation (2, 3, 6, 7) hin eine dahingehende Information an den Operator Station Client (15) überträgt, um den Operator visuell, vorzugsweise zusätzlich akustisch und/oder haptisch, auf die Änderung der visuellen Repräsentationsinformation (2, 3, 6, 7) hinzuweisen.

## Beschreibung

Die Erfindung betrifft ein Leitsystem für eine technische Anlage, welches wenigstens einen Operator Station Server und einen Operator Station Client aufweist, welcher Operator Station Server einen Visualisierungsdienst zur Ausgabe von Bildinformationen an den Operator Station Client aufweist, wobei der Operator Station Server dazu ausgebildet ist, zu einer Laufzeit der technischen Anlage zu wenigstens einem technischen Objekt der technischen Anlage eine visuelle Repräsentationsinformation zu erzeugen, und wobei der Visualisierungsdienst dazu ausgebildet ist, die visuelle Repräsentationsinformation an den Operator Station Client zu übertragen, und wobei der Operator Station Client dazu ausgebildet ist, die visuelle Repräsentationsinformation einem Operator der technischen Anlage visuell darzubieten. Außerdem betrifft die Erfindung ein Verfahren und eine Verwendung eines Leitsystems zum Betrieb einer technischen Anlage.

Für die Bedienung und Beobachtung verfahrenstechnischer Anlagen werden Operatoren dynamisierte Anlagenbilder und unterschiedliche grafische Ansichten zur Darstellung von Trendverläufen, Alarmsequenzen oder Zuständen von Prozessobjekten angeboten. Im Regelbetrieb sind insbesondere Übersichtsbilder von Bedeutung, in denen der aktuelle Zustand der verfahrenstechnischen Anlagenteile "komprimiert" dargestellt wird. Typischerweise handelt ein Operator, wenn beim Betrieb Alarme auftreten, oder um routinemäßige Prüfungen oder Optimierungen vorzunehmen.

Bei routinemäßigen Prüfungen stützt sich ein Operator beispielsweise auf in Anlagenbildern enthaltene dynamisierte Objekte wie Füllstandsanzeigen, Fließpfeile, Farbumschläge, Warnzeichen, usw. Auch bei außerordentlichen Prüfungen - z.B. beim Hochrüsten eines Anlagenteils - kann sich ein Operator auf dynamisierte Objekte stützen.

Die Überwachung von dynamisierten Objekten erfolgt nach dem Stand der Technik manuell, d.h. der Operator wählt die dafür notwendigen Anlagenbilder an und überprüft visuell die für ihn interessanten dynamisierten, grafischen Objekte. Je nach Umfang der Prüfungen kann es entsprechend lange dauern, bis der Operator eine relevante Änderung im Prozess erkennt und darauf eingehen kann. Idealerweise sollte jedoch ein Operator auf eine Änderung im Prozess reagieren können, bevor ein verfahrenstechnischer Alarm auf die Änderung fokussiert. Das kann bei bekannten Leitsystemen jedoch nicht gewährleitet werden können. Ebenfalls kann es vorkommen, dass bei routinemäßigen Prüfungen Objekte übersehen werden, die eigentlich beobachtet werden sollen.

In der DE 10 2018 124 358 A1 ist eine graphische Anzeige einer Prozessanlage mit dynamisierten Objekten wie einer Füllstandsanzeige offenbart.

Der Erfindung liegt die Aufgabe zugrunde, ein Leitsystem für eine technische Anlage anzugeben, welches eine effizientere Lenkung eines Operators des Leitsystems hin zu relevanten Änderungen in der technischen Anlage ermöglicht.

Die zuvor formulierte Aufgabe wird durch ein Leitsystem für eine technische Anlage mit den Merkmalen des Anspruchs 1 gelöst. Das Leitsystem weist wenigstens einen Operator Station Server und einen Operator Station Client auf, wobei der Operator Station Server einen Visualisierungsdienst zur Ausgabe von Bildinformationen an den Operator Station Client aufweist.

Der Operator Station Server ist dazu ausgebildet, zu einer Laufzeit der technischen Anlage zu wenigstens einem technischen Objekt der technischen Anlage eine visuelle Repräsentationsinformation zu erzeugen. Dabei ist der Visualisierungsdienst dazu ausgebildet, die visuelle Repräsentationsinformation an den Operator Station Client zu übertragen.

Der Operator Station Client ist dazu ausgebildet, die visuelle Repräsentationsinformation einem Operator der technischen Anlage visuell darzubieten.

Das erfindungsgemäße Leitsystem ist dadurch gekennzeichnet, dass der Operator Station Client dazu ausgebildet ist, von dem Operator einen Überwachungstrigger bezüglich der visuellen Repräsentationsinformation zu empfangen und an den Operator Station Server weiterzuleiten. Dabei ist der Operator Station Server dazu ausgebildet, in Reaktion auf den empfangenen Überwachungstrigger eine Überwachung der visuellen Repräsentationsinformation dahingehend einzurichten.

Weiterhin ist das Leitsystem dadurch gekennzeichnet, dass der Operator Station Server in Reaktion auf eine Änderung der visuellen Repräsentationsinformation hin eine dahingehende Information an den Operator Station Client überträgt, um den Operator visuell, vorzugsweise zusätzlich akustisch und/oder haptisch, auf die Änderung der visuellen Repräsentationsinformation hinzuweisen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann zusätzlich Sensoren zur Ermittlung von Messwerten sowie verschiedene Aktoren umfassen. Zudem kann das Leitsystem zusätzlich sogenannte prozessnahe Komponenten umfassen, die zur Ansteuerung der Aktoren bzw. Sensoren dienen.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern (sogenannten Operatoren) zur Verfügung stellt. Der Operator Station Server stellt in der Regel eine Kommunikationsverbindung zu Automatisierungssystemen der technischen Anlage her und gibt Daten der technischen Anlage an den sogenannten Operator Station Client weiter, die zur Bedienung und Beobachtung eines Betriebs der einzelnen Funktionselemente der technischen Anlage dienen.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Operator wird ein menschlicher Bediener der technischen Anlage verstanden. Der Operator interagiert mittels spezieller Benutzerschnittstellen mit der technischen Anlage bzw. dessen Leitsystem und steuert spezielle technische Funktionen der technischen Anlage. Hierzu kann der Operator ein Bedien- und Beobachtungssystem (den Operator Station Client in Verbindung mit dem Operator Station Server) des Leitsystems nutzen.

Unter einem technischen Objekt wird eine abgeschlossene technische Einheit verstanden, die in eine übergeordnete Steuerungsebene integrierbar ist. Ein solches technisches Objekt kann zum Beispiel ein Zusammenschluss mehrerer Messstellen oder ein größerer Anlagenteil einer industriellen Anlage sein. Das technische Objekt muss aber nicht dem Feld der Industrieanlagen entstammen, sondern kann beispielsweise auch ein Motormodul eines Automobils, eines Schiffs oder dergleichen sein.

Der Operator kann mithilfe des erfindungsgemäßen Leitsystems die technische Anlage effizienter und auch sicherer bedienen und beobachten. Durch den Überwachungstrigger, den der Operator für die visuelle Repräsentationsinformation setzen und sich einrichten lassen kann, wird der Operator gezielt auf Änderungen innerhalb der visuellen Repräsentationsinformation hingewiesen.

Bei der visuellen Repräsentationsinformation kann es sich beispielsweise um einen Pfeil zur Anzeige einer Fließrichtung innerhalb einer Rohrleitung handeln. Das dazugehörige technische Objekt kann ein Durchflussmessgerät sein, welches einen Fluss durch die Rohrleitung überwacht. Ändert sich beispielsweise die Fließrichtung innerhalb der Rohrleitung, erkennt der Operator Station Server diese Änderung und ändert daraufhin die Darstellung des Pfeils (der Pfeil ändert seine Richtung), d.h. die visuelle Repräsentationsinformation wird angepasst bzw. geändert.

Hierauf wird der Operator dann mittels des erfindungsgemäßen Leitsystems vorteilhafterweise hingewiesen. Der Hinweis kann beispielsweise in Form einer graphischen Umrandung des betreffenden Pfeils liegen, optional auch zusätzlich unterstützt durch einen akustischen Warnton und/oder ein haptisches Feedback. Letzteres kann beispielsweise einfach zur Anwendung kommen, wenn der Operator Station Client, den der Operator nutzt, ein Smartphone ist.

Der Operator ist nicht darauf beschränkt, nur einmal einen Überwachungstrigger zu setzen, sondern er kann die Operation mehrere Male vornehmen, um beispielsweise neu hinzugekommene technische Objekte der technischen Anlage seiner Überwachung hinzuzufügen. Es ist dem Operator ebenfalls möglich, bestehende Überwachungen wieder zu widerrufen, wenn er diese nicht mehr benötigt.

Das Leitsystem ist nicht darauf beschränkt, dem Operator nur eine visuelle Repräsentationsinformation eines einzigen technischen Objektes visuell darzubieten. Vielmehr erzeugt das Leitsystem in der Regel für eine Vielzahl von technischen Objekten dazugehörige visuelle Repräsentationsinformationen und bietet sie dem Operator visuell dar. Man spricht hier auch von sogenannten Anlagenbildern, in denen die technischen Objekte der ganzen technischen Anlage oder eines Teils davon visuell wiedergegeben werden. Der Operator kann das Leitsystem dazu verwenden, nur für eine Teilmenge der visuellen Repräsentationsinformationen (für eine einzige oder für eine Gruppe) den Überwachungstrigger zu setzen.

Bevorzugt ist das Leitsystem dazu ausgebildet, den Operator unabhängig von einer dem Operator aktuell visuell dargebotenen Information visuell auf die Änderung der visuellen Repräsentationsinformation hinzuweisen. Hat der Operator einen oder mehrere Überwachungstrigger gesetzt, wird dem Operator der visuelle (und ggf. akustische und/oder haptische) Hinweise mit hoher Priorität angezeigt - unabhängig davon, was ihm aktuell durch das Leitsystem visuell dargeboten wird. Hierdurch steigert sich die Wirksamkeit der Überwachung bzw. des Hinweisens deutlich.

Das Leitsystem ist nicht auf einen einzigen Operator Station Client beschränkt. Es ist eher die Regel als die Ausnahme, dass ein Operator mehrere verschiedene Operator Station Clients zum Bedienen und Beobachten der technischen Anlage nutzen kann. Das Leitsystem umfasst daher bevorzugt wenigstens einen weiteren Operator Station Client, der analog zu dem (ersten) Operator Station Client wie zuvor beschrieben ausgebildet ist. Der Operator kann sich beispielsweise nach dem Anweisen der Überwachung von dem ersten Operator Station Client ausloggen und auf dem zweiten Operator Station Client einloggen und bekommt von dem Operator Station Server weiterhin die Funktionalität der Überwachung und des Hinweisens zur Verfügung gestellt.

Die obenstehende Aufgabe wird zudem gelöst durch die Verwendung eines Leitsystems, wie es zuvor erläutert wurde, zum Betrieb einer technischen Anlage.

Die obenstehende Aufgabe wird zudem gelöst durch ein Verfahren, welches die folgenden Verfahrensschritte umfasst:
a) Zu einer Laufzeit einer technischen Anlage, Erzeugen einer visuellen Repräsentationsinformation zu wenigstens einem technischen Objekt der technischen Anlage durch einen Operator Station Server eines Leitsystems der technischen Anlage,
b) Übertragen der visuellen Repräsentationsinformation durch einen Visualisierungsdienst des Operator Station Servers an einen Operator Station Client des Leitsystems der technischen Anlage,
c) Visuelles Darbieten der visuellen Repräsentationsinformation an einen Operator der technischen Anlage durch den Operator Station Client,
d) Empfangen eines Überwachungstriggers bezüglich der visuellen Repräsentationsinformation von dem Operator durch den Operator Station Client
e) Weiterleiten des Überwachungstriggers an den Operator Station Server,
f) In Reaktion auf den empfangenen Überwachungstrigger Einrichten einer Überwachung der visuellen Repräsentationsinformation durch den Operator Station Server, dahingehend, dass der Operator Station Server in Reaktion auf eine Änderung der visuellen Repräsentationsinformation hin eine dahingehende Information an den Operator Station Client überträgt, um den Operator visuell, vorzugsweise zusätzlich akustisch und/oder haptisch, auf die Änderung der visuellen Repräsentationsinformation hinzuweisen.

Bevorzugt erzeugt der Operator Station Server zu einer Laufzeit der technischen Anlage zu wenigstens zwei technischen Objekten der technischen Anlage eine visuelle Repräsentationsinformation, und der Operator Station Client empfängt von dem Operator einen Überwachungstrigger bezüglich einer Teilmenge bezüglich der visuellen Repräsentationsinformation der wenigstens zwei technischen Objekte und leitet diese an den Operator Station Server weiter, wobei die übrigen Schritte wie zuvor beschrieben analog ausgeführt werden.

Besonders bevorzugt wird der Operator unabhängig von einer dem Operator aktuell visuell dargebotenen Information visuell auf die Änderung der visuellen Repräsentationsinformation hingewiesen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: eine grafische Benutzeroberfläche eines erfindungsgemäßen Leitsystems einer technischen Anlage gemäß einem ersten Aspekt;
- FIG 2: eine grafische Benutzeroberfläche eines erfindungsgemäßen Leitsystems einer technischen Anlage gemäß einem zweiten Aspekt; und
- FIG 3: eine schematische Zeichnung eines Teils eines erfindungsgemäßen Leitsystems.

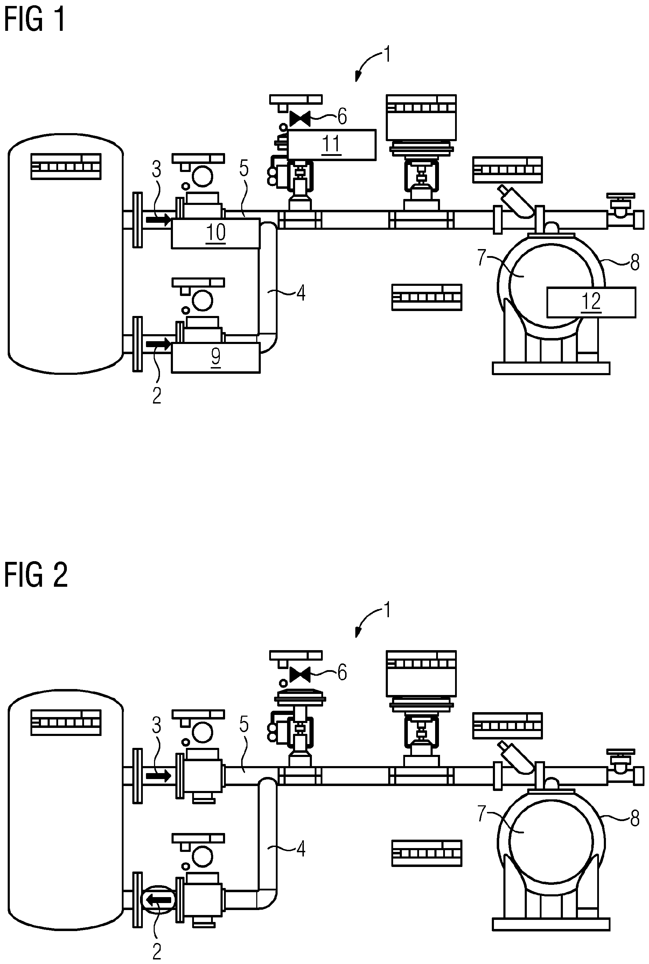

FIG 1 zeigt eine grafische Benutzeroberfläche 1 eines Leitsystems einer als Prozessanlage ausgebildeten technischen Anlage. Auf der grafischen Benutzeroberfläche 1 ist ein Anlagenbild der Prozessanlage dargestellt. Das Anlagenbild umfasst eine Vielzahl von visuellen Repräsentationsinformationen, die technische Objekte der Prozessanlage repräsentieren. Eine erste visuelle Repräsentationsinformation 2 und eine zweite visuelle Repräsentationsinformation 3 stellen Fließpfeile dar, die eine Flussrichtung eines Mediums durch Rohrleitungen 4, 5 anzeigen. Eine dritte visuelle Repräsentationsinformation 6 stellt einen Öffnungszustand eines Ventils dar. Eine vierte visuelle Repräsentationsinformation 7 stellt einen Füllstand eines Tanks 8 dar.

In dem Ausführungsbeispiel gemäß FIG 1 setzt ein Operator für jede der zuvor erläuterten vier visuellen Repräsentationsinformationen 2, 3, 6, 7 einen Überwachungstrigger 9, 10, 11, 12. Hierzu kann er beispielsweise einen Rahmen um einen zu beobachteten Bereich der graphischen Benutzeroberfläche ziehen, wobei der Operator Station Client dann automatisch erkennt, welche visuellen Repräsentationsinformationen 2, 3, 6, 7 der Operator überwacht haben möchte. Der Operator kann aber auch gezielt eine bestimmte visuelle Repräsentationsinformation 2, 3, 6, 7 anwählen (durch ein Anklicken oder dergleichen). Der Operator Station Client, der die graphische Benutzeroberfläche zur Verfügung stellt, gibt die vier Überwachungstrigger 9, 10, 11, 12 oder die Bereiche um die vier Überwachungstrigger 9, 10, 11, 12 herum an einen mit dem Operator Station Client verbundenen Operator Station Server weiter.

Der Operator Station Server richtet darauf eine Überwachung der von dem Operator ausgewählten visuellen Repräsentationsinformationen 2, 3, 6, 7 ein. Wenn sich eine Änderung der visuellen Repräsentationsinformation ergibt, überträgt der Operator Station Server eine dahingehende Information an den Operator Station Client. Eine solche Änderung kann sich für das Beispiel der Fließpfeile der ersten und zweiten Visualisierungsinformation 2 ,3 aus einer entsprechenden Sensorinformation ergeben, die dem Operator Station Server mitgeteilt wird (z.B. "Sensorwert ändert das Vorzeichen"). Eine solche Änderung kann sich aber auch aus einer geänderten Projektierung der Prozessanlage ergeben. In diesem Fall würde eine Änderung beispielsweise in einem Wegfall eines technischen Objektes der Prozessanlage bestehen, welcher wiederum zu einem Wegfall der entsprechenden visuellen Repräsentationsinformation in der graphischen Benutzeroberfläche 1 führen würde.

In Reaktion auf die von dem Operator Station Server empfangene Information bezüglich einer erfolgten Änderung oder erfolgten Änderungen weist der Operator Station Client den Operator visuell auf die Änderung(en) hin. FIG 2 verdeutlicht einen solchen Hinweis. Der Fließpfeil der ersten visuellen Repräsentationsinformation 2 hat aufgrund einer entsprechenden Sensorinformation der Prozessanlage seine Richtung geändert. Auf diese Änderung wird der Operator durch eine (farbige) Umrandung des Fließpfeils direkt hingewiesen. Zur Betonung des Hinweises kann auch beispielsweise ein blinkendes oder sich bewegendes Grafikelement verwendet werden.

Hat der Operator ein anderes Anlagenbild geöffnet, auf dem die visuellen Repräsentationsinformationen 2, 3, 6, 7 nicht dargestellt sind, weist ihn der Operator Station Client dennoch auf eine erfolgte Änderung bei seinen beauftragten Änderungsüberwachungen hin, indem die betroffene visuelle Repräsentationsinformation 2, 3, 6, 7 beispielsweise in einem separaten Fenster "aufpoppt" oder indem das dem Operator dargebotene Anlagenbild automatisch auf das betroffene Anlagenbild wechselt.

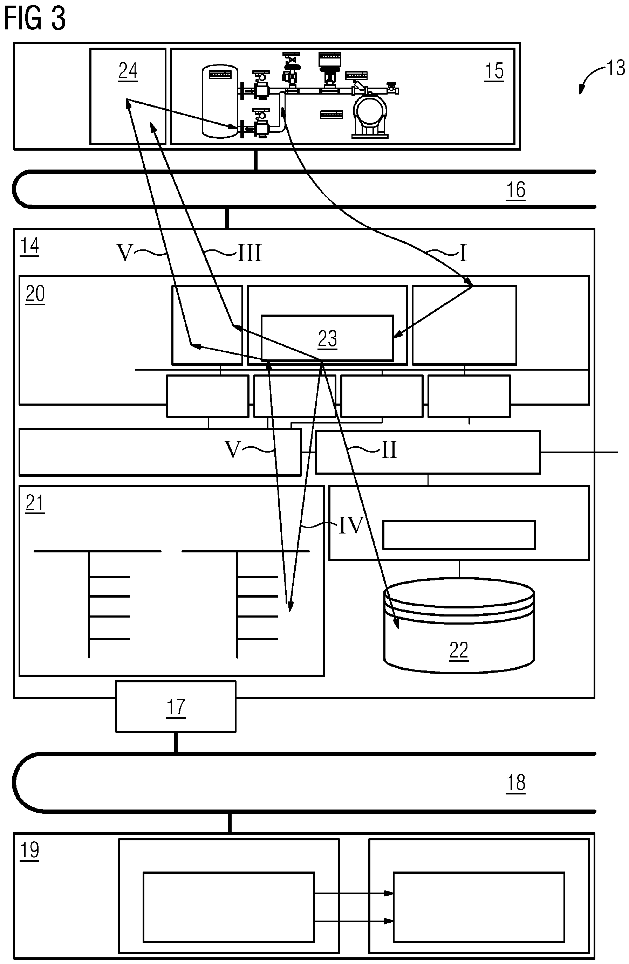

In FIG 3 ist ein Teil eines erfindungsgemäßen Leitsystems 13 einer Prozessanlage dargestellt. Das Leitsystem 13 umfasst einen Server eines Bediensystems bzw. einen Operator Station Server 14 und einen dazugehörigen Operator Station Client 15. Der Operator Station Server 14 und der Operator Station Client 15 sind über einen Terminalbus 16 miteinander und mit nicht dargestellten weiteren Komponenten des Leitsystems 13 wie einem Engineering System Server oder einem Prozessdatenarchiv verbunden.

Ein Benutzer bzw. Operator hat mittels des Operator Station Clients 15 mittels des Terminalbus 16 im Kontext eines Bedienens und Beobachtens Zugriff auf den Operator Station Server 14. Der Terminalbus 16 kann, ohne sich darauf zu beschränken, beispielsweise als Industrial Ethernet ausgebildet sein.

Der Operator Station Server 14 weist eine Geräteschnittstelle 17 auf, die mit einem Anlagenbus 18 verbunden ist. Hierüber kann der Operator System Server 14 mit einem Automatisierungsgerät 19 des Leitsystems 13 kommunizieren. Der Anlagenbus 18 kann, ohne sich darauf zu beschränken, beispielsweise als Industrial Ethernet ausgebildet sein. Das Automatisierungsgerät 19 kann wiederum mit einer beliebigen Anzahl an Subsystemen (nicht dargestellt) verbunden sein.

In dem Operator Station Server 14 ist ein Visualisierungsdienst 20 integriert, über den eine Übertragung von (Visualisierungs-)Daten an den Operator Station Client 15 erfolgen kann. Zudem weist der Operator Station Server 14 ein Prozessabbild (Process Image) 21 der Prozessanlage und eine Nutzerselektionsdatenbank 22 auf.

Im Folgenden wird der Ablauf eines erfindungsgemäßen Verfahrens erläutert. Der Operator Station Server 14 erzeugt visuelle Repräsentationsinformationen für eine Vielzahl von technischen Objekten der Prozessanlage (auf Basis von Projektierungsdaten aus einer Projektierungsphase der Prozessanlage). Diese visuellen Repräsentationsinformationen überträgt der Operator Station Server 14 an den Operator Station Client 15, welcher einem Operator eine graphische Benutzeroberfläche 1 mit darin enthaltenen visuellen Repräsentationsinformationen darbietet.

Der Operator der Prozessanlage setzt auf der graphischen Benutzeroberfläche 1 auf dem Operator Station Client 15 einen Überwachungstrigger für eine oder mehrere der visuellen Repräsentationsinformationen. Der oder die Überwachungstrigger werden daraufhin von dem Operator Station Client 15 an den Operator Station Server 14 übermittelt (Schritt I). Ein Verwaltungsdienst 23 des Operator Station Servers 14 hinterlegt die von dem Operator getriggerten Überwachungsaufträge in der Nutzerselektionsdatenbank 22 (Schritt II). Dadurch stehen die Überwachungsaufträge dem Operator auch bei einem Wechsel des Operator Station Clients 15 zur Verfügung. Zusätzlich veranlasst der Verwaltungsdienst 23, dass dem Operator in einer Selektionsübersicht 24 angezeigt wird (Schritt III), welche Überwachungen welcher visuellen Repräsentationsinformationen er in Auftrag gegeben hat und wie deren Status ist (aktiv, deaktiviert, gelöscht etc.).

Liegt der visuellen Repräsentationsinformation ein Prozesswert (Sensorwert) zugrunde, ruft der Verwaltungsdienst 23 in regelmäßigen Abständen die entsprechenden aktuellen Prozesswerte aus dem Prozessabbild 21 ab (Schritt IV). Ändert sich der angefragte Prozesswert derart, dass sich die visuelle Repräsentationsinformation ändert, veranlasst der Verwaltungsdienst 23 die entsprechende Notifikation auf dem Operator Station Client 15 (Schritt V).

Obwohl die Erfindung im Detail durch das bevorzugte Ausführungsbeispiel und die Figuren näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (13) für eine technische Anlage, welches wenigstens einen Operator Station Server (14) und einen Operator Station Client (15) aufweist,
welcher Operator Station Server (14) einen Visualisierungsdienst (20) zur Ausgabe von Bildinformationen an den Operator Station Client (15) aufweist,
wobei der Operator Station Server (14) dazu ausgebildet ist, zu einer Laufzeit der technischen Anlage zu wenigstens einem technischen Objekt der technischen Anlage eine visuelle Repräsentationsinformation (2, 3, 6, 7) zu erzeugen,
und wobei der Visualisierungsdienst (20) dazu ausgebildet ist, die visuelle Repräsentationsinformation (2, 3, 6, 7) an den Operator Station Client (15) zu übertragen,
und wobei der Operator Station Client (15) dazu ausgebildet ist, die visuelle Repräsentationsinformation (2, 3, 6, 7) einem Operator der technischen Anlage visuell darzubieten,
**dadurch gekennzeichnet, dass**
der Operator Station Client (15) dazu ausgebildet ist, von dem Operator einen Überwachungstrigger (9, 10, 11, 12) bezüglich der visuellen Repräsentationsinformation (2, 3, 6, 7) zu empfangen und an den Operator Station Server (14) weiterzuleiten,
wobei der Operator Station Server (14) dazu ausgebildet ist, in Reaktion auf den empfangenen Überwachungstrigger eine Überwachung der visuellen Repräsentationsinformation (2, 3, 6, 7) dahingehend einzurichten, dass der Operator Station Server (14) in Reaktion auf eine Änderung der visuellen Repräsentationsinformation (2, 3, 6, 7) hin eine dahingehende Information an den Operator Station Client (15) überträgt, um den Operator visuell, vorzugsweise zusätzlich akustisch und/oder haptisch, auf die Änderung der visuellen Repräsentationsinformation (2, 3, 6, 7) hinzuweisen.

2. Leitsystem (13) nach Anspruch 1, bei dem der Operator Station Server (14) dazu ausgebildet ist, zu einer Laufzeit der technischen Anlage zu wenigstens zwei technischen Objekten der technischen Anlage eine visuelle Repräsentationsinformation (2, 3, 6, 7) zu erzeugen, und bei dem der Operator Station Client (15) dazu ausgebildet ist, von dem Operator einen Überwachungstrigger (9, 10, 11, 12) bezüglich einer Teilmenge bezüglich der visuellen Repräsentationsinformation (2, 3, 6, 7) der wenigstens zwei technischen Objekte zu empfangen und an den Operator Station Server (14) weiterzuleiten, wobei das Leitsystem (13) im Übrigen analog zu Anspruch 1 ausgebildet ist.

3. Leitsystem (13) nach Anspruch 1 oder 2, das dazu ausgebildet ist, den Operator unabhängig von einer dem Operator aktuell visuell dargebotenen Information visuell auf die Änderung der visuellen Repräsentationsinformation (2, 3, 6, 7) hinzuweisen.

4. Leitsystem (13) nach einem der vorangegangenen Ansprüche, das wenigstens einen weiteren Operator Station Client (15) umfasst, der die für den Operator Station Client (15) gemäß Anspruch 1 definierten Merkmale aufweist, um für den Operator als weitere Möglichkeit zu fungieren, den Überwachungstrigger (9, 10, 11, 12) bezüglich einer visuellen Repräsentationsinformation (2, 3, 6, 7) zu setzen und visuell auf die Änderung der visuellen Repräsentationsinformation (2, 3, 6, 7) hingewiesen zu werden.

5. Verfahren, umfassend:
a) Zu einer Laufzeit einer technischen Anlage, Erzeugen einer visuellen Repräsentationsinformation (2, 3, 6, 7) zu wenigstens einem technischen Objekt der technischen Anlage durch einen Operator Station Server (14) eines Leitsystems (13) der technischen Anlage,
b) Übertragen der visuellen Repräsentationsinformation (2, 3, 6, 7) durch einen Visualisierungsdienst (20) des Operator Station Servers (14) an einen Operator Station Client (15) des Leitsystems (13) der technischen Anlage,
c) Visuelles Darbieten der visuellen Repräsentationsinformation (2, 3, 6, 7) an einen Operator der technischen Anlage durch den Operator Station Client (15),
d) Empfangen eines Überwachungstriggers bezüglich der visuellen Repräsentationsinformation (2, 3, 6, 7) von dem Operator durch den Operator Station Client (15),
e) Weiterleiten des Überwachungstriggers (9, 10, 11, 12) an den Operator Station Server (14),
f) In Reaktion auf den empfangenen Überwachungstrigger (9, 10, 11, 12) Einrichten einer Überwachung der visuellen Repräsentationsinformation (2, 3, 6, 7) durch den Operator Station Server (14), dahingehend, dass der Operator Station Server (14) in Reaktion auf eine Änderung der visuellen Repräsentationsinformation (2, 3, 6, 7) hin eine dahingehende Information an den Operator Station Client (15) überträgt, um den Operator visuell, vorzugsweise zusätzlich akustisch und/oder haptisch, auf die Änderung der visuellen Repräsentationsinformation (2, 3, 6, 7) hinzuweisen.

6. Verfahren nach Anspruch 5, bei dem der Operator Station Server (14) zu einer Laufzeit der technischen Anlage zu wenigstens zwei technischen Objekten der technischen Anlage eine visuelle Repräsentationsinformation (2, 3, 6, 7) erzeugt, und bei dem der Operator Station Client (15) von dem Operator einen Überwachungstrigger (9, 10, 11, 12) bezüglich einer Teilmenge bezüglich der visuellen Repräsentationsinformation (2, 3, 6, 7) der wenigstens zwei technischen Objekte empfängt und an den Operator Station Server (14) weiterleitet, wobei die übrigen Schritte von Anspruch 5 analog ausgeführt werden.

7. Verfahren nach Anspruch 5 oder 6, bei dem der Operator unabhängig von einer dem Operator aktuell visuell dargebotenen Information visuell auf die Änderung der visuellen Repräsentationsinformation (2, 3, 6, 7) hingewiesen wird.

8. Verwendung eines Leitsystems (13) gemäß einem der Ansprüche 1 bis 4 zum Betrieb einer technischen Anlage.
